# EUROPÄISCHE PATENTSCHRIFT

(11) **EP 2 985 948 B1**
(45) Veröffentlichungstag und Bekanntmachung des Hinweises auf die Patenterteilung: **11.07.2018**
(21) Anmeldenummer: 14180908.7
(22) Anmeldetag: 14.08.2014
(51) Int. Cl.: H04L 12/24, H04L 12/707, H04L 12/703, H04L 1/18, H04L 29/14

(54) **VERFAHREN ZUM AUSTAUSCH VON TELEGRAMMEN ZWISCHEN ZWEI KOMMUNIKATIONSTEILNEHMERN**
METHOD FOR EXCHANGING TELEGRAMS BETWEEN TWO COMMUNICATING PARTICIPANTS
PROCÉDÉ D'ÉCHANGE DE TÉLÉGRAMMES ENTRE DEUX PARTICIPANTS EN COMMUNICATION

(43) Veröffentlichungstag der Anmeldung: 17.02.2016
(73) Patentinhaber: Siemens Aktiengesellschaft, 80333 München (DE)
(72) Erfinder: Renschler, Albert, 76275 Ettlingen (DE); Grosch, Thomas, 90574 Roßtal (DE); Laforsch, Jürgen, 77815 Bühl (DE)

(56) Entgegenhaltungen:
- WO-A1-2006/128398
- US-B1- 6 683 850
- TANNENBAUM A S ED - TANENBAUM A S: "Computer Networks, chapter 3", 1. Januar 1996 (1996-01-01), COMPUTER NETWORKS, PRENTICE-HALL INTERNATIONAL, LONDON ; GB, PAGE(S) 175 - 242, XP002572908, ISBN: 978-0-13-394248-4 * Seite 208 - Seite 209 *

## Beschreibung

Die Erfindung betrifft ein Verfahren zum Austausch von Telegrammen zwischen zwei Kommunikationsteilnehmern, wobei die Teilnehmer jeweils zumindest an einen ersten und an einen zweiten Kommunikationskanal angeschlossen sind und wobei die Telegramme jeweils einen Telegrammkopf und einen Datenblock umfassen. Darüber hinaus betrifft die Erfindung eine Anordnung zur Durchführung eines derartigen Verfahrens sowie einen Kommunikationsteilnehmer für eine solche Anordnung.

Aus dem Siemens-Katalog "SIMATIC, ST 70, Kapitel 4, Ausgabe 2013 ist ein hochverfügbares Automatisierungssystem bekannt. Dieses weist zwei Automatisierungsgeräte auf, die jeweils an eine so genannte Produktiv- und an eine so genannte Standby-Kommunikationsverbindung angeschlossen sind. Über die Produktiv-Kommunikationsverbindung übermitteln die Automatisierungsgeräte Telegramme bzw. tauschen diese Automatisierungsgeräte Informationen aus, dagegen wird über die Standby-Kommunikationsverbindung lediglich überwacht, ob diese Standby-Kommunikationsverbindung überhaupt genutzt werden kann. Für den Fall, dass die Produktiv-Kommunikationsverbindung gestört ist, erfolgt der Informationsaustausch nach dem Ablauf eines "time-out" über die Standby-Kommunikationsverbindung, was bedeutet, dass diese Standby-Kommunikationsverbindung in eine Produktiv-Kommunikationsverbindung wechselt. Dieser Wechsel führt bezüglich der Kommunikation zu einer langen Totzeit, was sich beispielsweise nachteilig auf ein Bedienen und Beobachten eines zu steuernden technischen Prozesses auswirkt.

Es ist auch möglich, anstatt nur auf einer Kommunikationsverbindung die Informationen über zwei Kommunikationsverbindungen auszutauschen. Dies bedeutet ein zweifaches bzw. doppeltes Senden der Daten über zwei verschiedene Verbindungswege. Dadurch können im Fehlerfall - z. B. aufgrund des Ausfalls eines der beiden Verbindungswege - kurze Verzögerungszeiten bezüglich der Kommunikation erzielt werden. Darüber hinaus ist es erforderlich, dass der empfangende Kommunikationsteilnehmer das Duplikat, d. h. die Daten eines der beiden Verbindungswege, herausfiltert, was eine erhöhte Belastung des Kommunikationsteilnehmers sowie des Kommunikationsnetzes bedeutet.

WO 2006/128398 A1 beschreibt ein Verfahren zur sicheren Übertragung von Datentelegrammen zwischen einer Sendeeinheit und einer Empfangseinheit einer HGÜ-Anlage. Dort ist vorgesehen, dass die Sendeeinheit die Datentelegramme über alle Verbindungswege der Empfangseinheit übermittelt. Es wird zudem ein Verfahren offenbart, welches nach der Ausgabe einer Fehlermeldung infolge eines Verlustes eines Telegramms auf einem ersten Kanal, das Umschalten der Übertragung auf einen Ausweichkanal zur Folge hat.

Der Erfindung liegt daher die Aufgabe zugrunde, ein Verfahren der eingangs genannten Art anzugeben, welches die Kommunikationsbelastung zwischen Kommunikationsteilnehmern vermindert sowie die Umschaltzeiten zwischen Kommunikationskanälen verringert. Darüber hinaus ist eine Anordnung zu schaffen, welche zur Durchführung eines derartigen Verfahrens geeignet ist, sowie ein Kommunikationsteilnehmer für eine solche Anordnung.

Diese Aufgabe wird im Hinblick auf das Verfahren durch die im kennzeichnenden Teil des Anspruchs 1 angegebenen, bezüglich der Anordnung durch die im kennzeichnenden Teil des Anspruchs 5 angegebenen sowie betreffend den Kommunikations-teilnehmer durch die im kennzeichnenden Teil des Anspruchs 3 angegebenen Maßnahmen gelöst.

Vorteilhaft ist, dass in einem störungsfreien Betrieb bzw. Normalbetrieb auf eine redundante Übermittlung eines Telegramms verzichtet werden kann. Nur für den Fall, dass beispielsweise einer der beiden Kommunikationskanäle gestört ist, wird das Telegramm wiederholt über den anderen Kommunikationskanal übermittelt. Diese erneute Übermittlung des Telegramms erfolgt zeitnah nach Ablauf der vorgegebenen oder der vorgebbaren Zeitspanne und somit auf das nicht quittierte Telegramm, wobei diese Zeitspanne eine definierte Umschaltzeit repräsentiert. Die Quittierung eines Telegramms erfolgt ebenfalls mittels eines Telegramms, wobei die im Rahmen eines Informationsaustauschs übermittelten und empfangenen Telegramme jeweils sowohl eine Sende- als auch eine Quittungsinformation enthalten. Erfindungsgemäß ist vorgesehen, dass mittels der Sendeinformation alle bisher übermittelten Telegramme und ferner mittels der Quittungsinformation alle bisher quittierten Telegramme angezeigt werden. Eine derartige Quittungsinformation ermöglicht, in einer einfachen Art und Weise mehrere "lückenlos" empfangene Telegramme gemeinsam zu quittieren.

Es kann z. B. vorkommen, dass in einem Telegramm eines ersten Teilnehmers eine Sendeinformation hinterlegt ist, die auf die Übermittlung eines fünften Telegramms an einen zweiten Teilnehmer hinweist. Dieser Hinweis umfasst auch die Information, dass bereits auch ein erstes, zweites, drittes und viertes Telegramm dem zweiten Teilnehmer übermittelt wurde. Für den Fall, dass der zweite Teilnehmer das fünfte Telegramm empfängt, aufgrund eines gestörten Kommunikationskanals aber das vierte Telegramm nicht erhalten hat, so quittiert der zweite Teilnehmer nur bis zum dritten Telegramm. Die Quittierung erfolgt, indem der zweite Teilnehmer eine entsprechende Quittungsinformation, z. B. in Form eines Quittungswertes 3, in ein an den ersten Teilnehmer zu sendendes Telegramm hinterlegt. In diesem Fall wiederholt der erste Teilnehmer, welcher diese Quittungsinformation - also den Wert 3 - aus dem empfangenen Telegramm ausliest, die Übermittlung des vierten und fünften Telegrams über den anderen Kommunikationskanal.

In einer weiteren Ausgestaltung der Erfindung ist vorgesehen, dass die Sendeinformation der Wert eines Zählers ist, wobei bei jedem neuen Telegramm ein inkrementierter Wert übermittelt wird. Der Wert wird dagegen nicht inkrementiert, falls ein oder mehrere Telegramme wiederholt zu übermitteln sind. Ferner ist vorgesehen, dass die Quittungsinformation der Wert eines weiteren Zählers ist, wobei dieser Wert dem letzen lückenlos empfangenen Wert in einer vorgegebenen Reihenfolge von empfangenen Telegrammen entspricht. Mittels derartiger Maßnahmen können in einfacher Weise die Sende- sowie die Quittungsinformationen erzeugt werden.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Darstellung
Figur 1 ein Sequenzdiagramm,
Figur 2 einen Telegrammaufbau und
Figur 3 ein redundantes Kommunikationssystem.

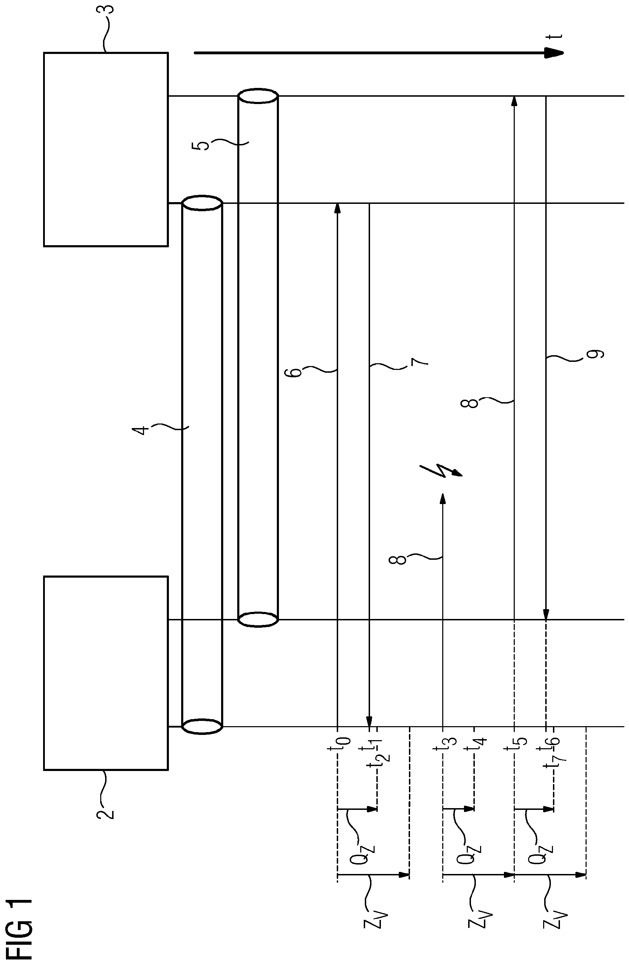

Die in den Figuren 1 bis 3 dargestellten gleichen Teile sind mit gleichen Bezugszeichen versehen.

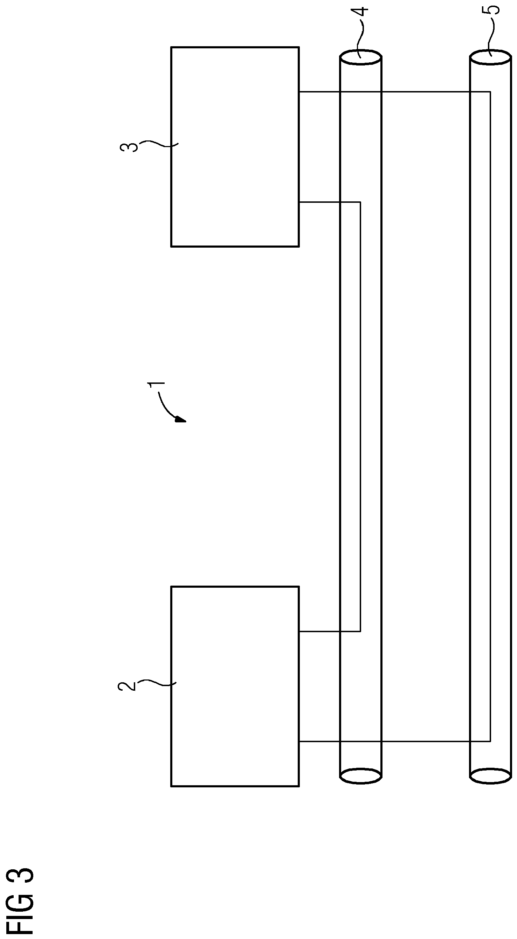

Es wird zunächst auf Figur 3 verwiesen, in welcher ein an sich bekanntes redundantes Kommunikationssystem 1 dargestellt ist. Dieses Kommunikationssystem 1 umfasst zwei Kommunikationsteilnehmer 2, 3, die beispielsweise als Automatisierungsgeräte und/oder Bedien- und Beobachtungsgeräte und/oder als Feldgeräte und/oder als weitere zur Steuerung eines technischen Prozesses oder zur Steuerung einer Anlage geeignete Automatisierungskomponente ausgebildet sein können. Die Teilnehmer 2, 3 tauschen Informationen mittels zeitlich versetzter, Nutzdaten umfassender Telegramme über redundant ausgebildete Verbindungswege aus. Der zeitliche Versatz definiert einen Mindestzeitabstand zwischen aufeinanderfolgenden zu sendenden Telegrammen, d. h. dieser zeitliche Versatz gibt vor, wann (Sendezeitpunkt) nach der Übermittlung eines Telegramms durch einen der Teilnehmer frühestens ein weiteres Telegramm durch diesen Teilnehmer übermittelt werden kann. Dabei ist sichergestellt, dass im störungsfreien Betrieb die Quittierung mittels des empfangenden Teilnehmers 3 während einer Quittierungszeitspanne sicher innerhalb dieses zeitlichen Versatzes bewerkstelligt werden kann. Im vorliegenden Ausführungsbeispiel sind als redundante Verbindungswege ein erster und ein zweiter Kommunikationskanal 4, 5 vorgesehen, wobei die Teilnehmer 2, 3 jeweils an den ersten und an den zweiten Kommunikationskanal 4, 5 angeschlossen sind. Der Informationsaustausch erfolgt drahtgebunden oder drahtlos mittels eines an sich bekannten Kommunikations- bzw. Netzwerkprotokolls, z. B. in Form eines TCP/IP- oder UDP-Protokolls.

Im Folgenden wird auf Figur 1 verwiesen, in welcher in vereinfachter Form ein Sequenzdiagramm dargestellt ist. Dort sind mit Qz vorgegebene Quittungszeitspannen bzw. Quittungszeitintervalle bezeichnet, wobei während der jeweiligen Quittungszeitspanne Qz der eine Teilnehmer 2 prüft, ob der andere Teilnehmer 3 mittels einer Quittungsinformation in einem von diesem Teilnehmer 3 dem einen Teilnehmer 2 den Erhalt eines vom Teilnehmer 2 gesendeten Telegramms quittiert. Der Beginn der jeweiligen Quittungszeitspanne entspricht dem Beginn eines jeweiligen zeitlichen Versatzes Zv, welcher - wie beschrieben - vorgibt, wann nach der Übermittlung eines Telegramms mittels eines Teilnehmers diesem Teilnehmer frühestens ein weiteres Telegramm übermittelt werden kann. Im vorliegenden Ausführungsbeispiel ist der Einfachheit und der Übersichtlichkeit halber lediglich der zeitliche Versatz Zv bezüglich des Teilnehmers 2 dargestellt. Selbstverständlich ist auch für den anderen Teilnehmer 3 ein zeitlicher Versatz vorgegeben, wobei dieser Versatz ebenfalls einen Mindestzeitabstand zwischen aufeinanderfolgenden zu sendenden Telegrammen des anderen Teilnehmers 3 definiert und vorgibt, wann nach der Übermittlung eines Telegramms durch den anderen Teilnehmer 3 frühestens ein weiteres Telegramm durch diesen anderen Teilnehmer 3 übermittelt werden kann.

Es wird davon ausgegangen, dass der Teilnehmer 2 zu einem Zeitpunkt t0 dem anderen Teilnehmer 3 ein Telegramm 6 über den Kommunikationskanal 4 übermittelt, wobei ferner davon ausgegangen wird, dass zu einem Zeitpunkt t1 während der Quittungszeitspanne Qv (vom Zeitpunkt t0 bis zu einem Zeitpunkt t2) der andere Teilnehmer 3 den Empfang des Sende-Telegramms 6 mittels einer Quittungsinformation eines Telegramms 7 über diesen Kommunikationskanal 4 quittiert. Der sendende Teilnehmer 2 erkennt, dass der Empfang des Telegramms 7 während dieser Quittungszeitspanne Qz erfolgte, was auf eine störungsfreie Kommunikation hinweist. In einem praktischen Ausführungsbeispiel der Erfindung sind für den jeweiligen zeitlichen Versatz 100 Millisekunden und für die jeweilige Quittierungszeitspanne Qz <10 Millisekunden vorgesehen.

Es kann vorkommen, dass aufgrund eines gestörten Kommunikationskanals 4 über diesen Verbindungsweg ein vom Teilnehmer 2 gesendetes Telegramm vom Teilnehmer 3 und/oder ein Telegramm des Teilnehmers 3 vom Teilnehmer 2 nicht empfangen werden kann. Im vorliegenden Ausführungsbeispiel wird angenommen, dass zu einem Zeitpunkt t3 der eine Teilnehmer 2 ein weiteres Telegramm 8 für den anderen Teilnehmer 3 dem ersten Kommunikationskanal 4 aufschaltet, dieser Kommunikationskanal 4 allerdings gestört bzw. unterbrochen ist. Aufgrund des gestörten Kanals 4 empfängt der eine Teilnehmer 2 kein Telegramm während der Quittungszeitspanne Qz von dem Zeitpunkt t3 bis zu einem Zeitpunkt t4, wodurch der eine Teilnehmer 2 zu Beginn eines weiteren zeitlichen Versatzes Zv zu einem Zeitpunkt t5 das Telegramm 8 erneut dem anderen Teilnehmer 3 übermittelt. Der eine Teilnehmer 2 wählt zu dieser wiederholten Übermittlung des Telegramms 8 nun den zweiten Kommunikationskanal 5 aus. Der andere Teilnehmer 3 quittiert im vorliegenden Ausführungsbeispiel mittels einer Quittungsinformation eines Telegramms 9 den Empfang des Telegramms 8 über den zweiten Kommunikationskanal 5 zu einem Zeitpunkt t6 während der Quittungszeitspanne Qz vom Sendezeitpunkt t5 bis zu einem Zeitpunkt t7, was auf einen störungsfreien Kommunikationskanal 5 hinweist.

Um auch über eine längere Zeitspanne, während der keine Telegramme mit Nutzdaten gesendet werden, die Kommunikationskanäle 4, 5 überwachen zu können, übermittelt der eine Teilnehmer 2 dem anderen Teilnehmer 3 oder der andere Teilnehmer 3 dem einen Teilnehmer 2 in zeitlichen Abständen größer als der zeitliche Versatz Zv so genannte IDLE-Telegramme (Telegramme ohne Nutzdaten). Den Empfang eines derartigen IDLE-Telegramms quittiert in der beschriebenen Art und Weise der jeweilige empfangende Teilnehmer 2, 3 während einer jeweiligen Quittungszeitspanne Qz mittels eines eine Quittungsinformation aufweisendes Telegramms.

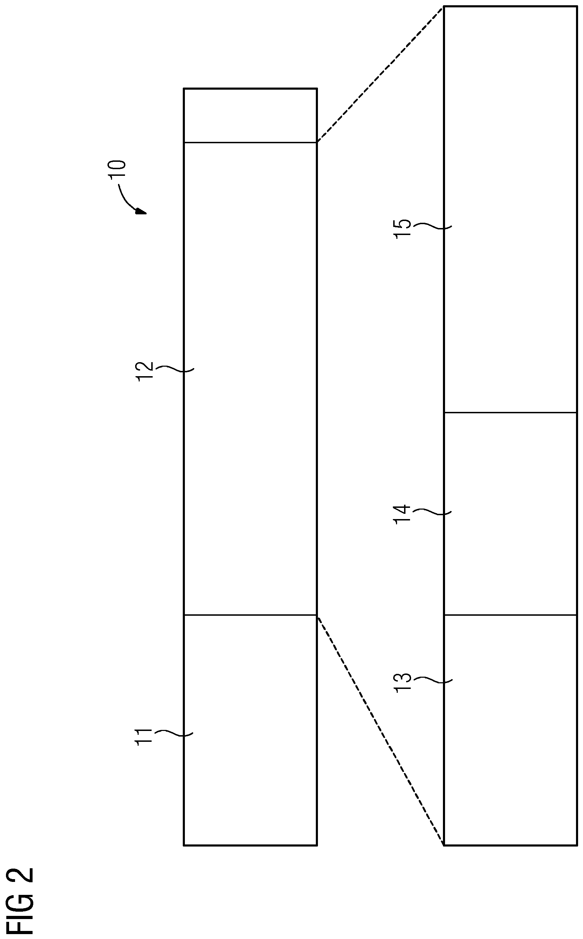

Der Aufbau eines Telegramms 10, mittels dem die beiden Teilnehmer 2, 3 Informationen austauschen, ist in Figur 2 dargestellt. Dieses Telegramm 10 weist einen Telegrammkopf 11 und einen Datenblock 12 auf, welcher eine Sendeinformation 13, eine Quittungsinformation 14 sowie Nutzdaten 15 umfasst.

Mittels der Quittungsinformation 14 quittiert - wie beschrieben - der andere Teilnehmer 3 dem einen Teilnehmer 2 den Empfang eines durch diesen einen Teilnehmer 2 übermittelten Telegramms. In der entsprechenden Art und Weise quittiert der eine Teilnehmer 2 dem anderen Teilnehmer 3 den Empfang eines durch diesen anderen Teilnehmer 3 übermittelten Telegramms.

Mittels der Sendeinformation 13 wird ermöglicht, dass nicht jedes einzelne Telegramm quittiert werden muss, sondern dass mehrere Telegramme gemeinsam quittiert werden können, wobei in diesem Fall das jeweilige Quittungszeitintervall Qz größer vorgegeben werden muss, als der jeweilige zeitliche Versatz Zv (Figur 1).

Es wird im Folgenden angenommen, dass das Quittungszeitintervall größer ist als der dreifache zeitliche Versatz, wodurch nach dem Empfang von drei Telegrammen diese gemeinsam quittiert werden können. Ferner wird angenommen, dass in einem Telegramm des einen Teilnehmers 2 eine Sendeinformation hinterlegt ist, die auf die Übermittlung eines sechsten Telegramms an den anderen Teilnehmer 3 hinweist. Dieser Hinweis umfasst auch die Information, dass bereits auch ein erstes, zweites, drittes, viertes und fünftes Telegramm dem anderen Teilnehmer 3 übermittelt wurde. Für den Fall, dass der andere Teilnehmer 3 das fünfte Telegramm empfängt, aufgrund eines gestörten Kommunikationskanals aber das vierte Telegramm nicht erhalten hat, so quittiert der andere Teilnehmer 3 mittels der Quittungsinformation nur bis zum dritten Telegramm.

Die Quittierung erfolgt, indem der andere Teilnehmer 3 eine entsprechende Quittungsinformation, z. B. in Form eines Quittungswertes 3, in ein an den einen Teilnehmer 2 zu sendendes Telegramm hinterlegt, wodurch das erste, zweite und dritte Telegramm gemeinsam quittiert sind. Der eine Teilnehmer 2 liest diese Quittungsinformation - also den Wert 3 - aus dem durch den anderen Teilnehmer 3 gesendeten und durch den einen Teilnehmer 2 empfangenen Telegramm aus und erkennt, dass der andere Teilnehmer 3 lediglich bis zum dritten Telegramm quittierte, wodurch der eine Teilnehmer 2 die Übermittlung des vierten, fünften und sechsten Telegramms über den anderen Kommunikationskanal wiederholt.

## Patentansprüche

1. Verfahren zum Austausch von Telegrammen (6, 7, 8, 9) zwischen zwei Kommunikationsteilnehmern (2, 3), wobei die Teilnehmer (2, 3) jeweils zumindest an einen ersten und an einen zweiten Kommunikationskanal (4, 5) angeschlossen sind und wobei die Telegramme (6, 7, 8, 9) jeweils einen Telegrammkopf (11) und einen Datenblock (12) umfassen, wobei mittels jeden Teilnehmers (2, 3) in ein solches zu übermittelndes Telegramm (6, 7, 8, 9) eine Sende- und eine Quittungsinformation (13, 14) in den Datenblock (12) eingetragen wird, wobei mittels der Sendeinformation alle bisher übermittelten Telegramme (6, 8; 7, 9) und mittels der Quittungsinformation (14) alle bisher quittierten Telegramme (6, 7, 8, 9) angezeigt werden, und wobei für den Fall, dass ein solches Telegramm (6, 8) von einem der beiden Teilnehmer (2) zum anderen Teilnehmer (3) über einen der Kommunikationskanäle (4) übermittelt wird und dieser eine Teilnehmer (2) von dem anderen Teilnehmer (3) nicht innerhalb einer vorgegebenen oder vorgebbaren Zeitspanne (Qz) ein Telegramm (7, 9) mit der Quittungsinformation (14) über den Empfang der bisher übermittelten Telegramme (6, 8) empfangen hat, die nicht quittierten Telegramme (6, 8) von dem einen Teilnehmer (2) zu dem anderen Teilnehmer (3) über den anderen Kommunikationskanal (5) wiederholt übermittelt werden.

2. Verfahren nach Anspruch 1, wobei die Sendeinformation (13) der Wert eines Zählers ist, wobei bei jedem neuen Telegramm ein inkrementierter Wert des Zählers als Sendeinformation (13) übermittelt wird, und dass die Quittungsinformation (14) der Wert eines weiteren Zählers ist, wobei dieser Wert dem letzten lückenlos empfangenen Wert in einer vorgegebenen Reihenfolge von empfangenen Telegrammen entspricht.

3. Kommunikationsteilnehmer der zumindest an einen ersten und an einen zweiten Kommunikationskanal (4, 5) angeschlossen ist und dazu ausgebildet ist, Telegramme (6, 7, 8, 9), welche jeweils einen Telegrammkopf (11) und einen Datenblock (12) umfassen, über die Kommunikationskanäle (4, 5) an einen anderen Teilnehmer zu übermitteln und von dem anderen Teilnehmer zu empfangen, wobei der Teilnehmer (2, 3) ferner dazu ausgebildet ist, in ein solches zu übermittelndes Telegramm (6, 7, 8, 9) eine Sende- und eine Quittungsinformation (13, 14) in den Datenblock (12) einzutragen, wobei mittels der Sendeinformation (13) alle bisher an den anderen Teilnehmer übermittelten solchen Telegramme (6, 8; 7, 9) und mittels der Quittungsinformation (14) alle bisher von dem anderen Teilnehmer quittierten Telegramme (6, 7, 8, 9) angezeigt werden, und dass für den Fall, dass der Teilnehmer (2, 3) ein solches Telegramm (6, 8) über einen der beiden Kommunikationskanäle (4) dem anderen Teilnehmer (2, 3) übermittelt und der Teilnehmer (2, 3) von dem anderen Teilnehmer (2, 3) nicht innerhalb einer vorgegebenen oder vorgebbaren Zeitspanne (Qz) ein Telegramm (7, 9) mit einer Quittungsinformation (14) über den Empfang der bisher übermittelten Telegrame (6, 8) empfangen hat, der Teilnehmer (2, 3) die nicht quittierten Telegramme (6, 8) dem anderen Teilnehmer (2, 3) über den anderen Kommunikationskanal (5) wiederholt übermittelt.

4. Kommunikationsteilnehmer nach Anspruch 3, wobei der Teilnehmer (2, 3) jeweils einen ersten und einen zweiten Zähler aufweist und dazu ausgebildet ist,
- den die Sendeinformation (13) repräsentierenden Wert des ersten Zählers zu inkrementieren, falls ein neues Telegramm zu übermitteln ist, und bei jedem neuen Telegramm den inkrementierten Wert zu übermitteln, und
- den die Quittungsinformation (14) repräsentierenden Wert des zweiten Zählers zu inkrementieren, wobei dieser Wert dem letzten lückenlos empfangenen Wert in einer vorgegebenen Reihenfolge von empfangenen Telegrammen entspricht.

5. Anordnung umfassend zwei Kommunikationsteilnehmer (2, 3) nach einem der vorangehenden Ansprüche 3 oder 4.

## Claims

1. Method for exchanging telegrams (6, 7, 8, 9) between two communicating participants (2, 3), wherein the participants (2, 3) are each connected at least to a first and a second communication channel (4, 5), and wherein the telegrams (6, 7, 8, 9) each comprise a telegram header (11) and a data block (12), wherein transmission and acknowledgement information (13, 14) is entered into the data block (12) by means of each participant (2, 3) in such a telegram (6, 7, 8, 9) to be transmitted, wherein all previously transmitted telegrams (6, 7, 8, 9) are indicated by means of the transmission information and all previously acknowledged telegrams (6, 7, 8, 9) are indicated by means of the acknowledgement information (14), and wherein in the event that such a telegram (6, 8) is transmitted from one of the two participants (2) to the other participant (3) via one of the communication channels (4) and said one participant (2) has not received from the other participant (3) within a predetermined or predeterminable period of time (Qz) a telegram (7, 9) containing the acknowledgment information (14) about the receipt of the previously transmitted telegram (6, 8), the non-acknowledged telegrams (6, 8) are transmitted once again from the one participant (2) to the other participant (3) via the other communication channel (5).

2. Method according to claim 1, wherein the transmission information (13) is the value of a counter, wherein for each new telegram an incremented value of the counter is transmitted as transmission information (13), and the acknowledgement information (14) is the value of a further counter, wherein said value corresponds to the last value received without interruption in a predefined sequence of received telegrams.

3. Communicating participant which is at least connected to a first and a second communication channel (4, 5) and which is designed to receive telegrams (6, 7, 8, 9) which in each case comprise a telegram header (11) and a data block (12), to transmit them via the communication channels (4, 5) to another participant and to receive them from the other participant, wherein the participant (2, 3) is further designed to enter transmission and acknowledgement information (13, 14) into the data block (12) in such a telegram (6, 7, 8, 9) to be transmitted, wherein all such telegrams (6, 7, 8, 9) previously transmitted to the other participant are indicated by means of the transmission information (13) and all telegrams (6, 7, 8, 9) previously acknowledged by the other participant are indicated by means of the acknowledgement information (14), and in the event that the participant (2, 3) transmits such a telegram (6, 8) to the other participant (2, 3) via one of the two communication channels (4) and the participant (2, 3) has not received from the other participant (2, 3) within a predetermined or predeterminable period of time (Qz) a telegram (7, 9) containing acknowledgment information (14) about the receipt of the previously transmitted telegrams (6, 8), the participant (2, 3) once again transmits the non-acknowledged telegrams (6, 8) to the other participant (2, 3) via the other communication channel (5) .

4. Communicating participant according to claim 3, wherein the participant (2, 3) in each case has a first and a second counter and is designed
- to increment the value of the first counter representing the transmission information (13), if a new telegram is to be transmitted, and for each new telegram to transmit the incremented value, and
- to increment the value of the second counter representing the acknowledgement information (14), wherein said value corresponds to the last value received without interruption in a predefined sequence of received telegrams.

5. Arrangement comprising two communicating participants (2, 3) according to one of the preceding claims 3 or 4.

## Revendications

1. Procédé d'échange de télégrammes (6, 7, 8, 9) entre deux participants (2, 3) en communication, les participants (2, 3) étant chacun raccordés au moins à un premier et à un deuxième canal (4, 5) de communication et les télégrammes (6, 7, 8, 9) comprenant chacun un entête (11) de télégramme et un bloc (12) de données, dans lequel, au moyen de chaque participant (2, 3), on introduit, dans un télégramme (6, 7, 8, 9) à transmettre de ce genre, une information (13, 14) d'envoi et d'accusé de réception dans le bloc (12) de données, dans lequel, au moyen de l'information d'envoi, on indique tous les télégrammes (6, 8; 7, 9) transmis jusqu'ici et, au moyen de l'information (14) d'accusé de réception, tous les télégrammes (6, 7, 8, 9) dont on a accusé réception jusqu'ici et dans lequel, dans le cas où un télégramme (6, 8) de ce genre a été transmis de l'un des deux participants (2) à l'autre participant (3) par l'un des canaux (4) de communication et ce un participant (2) n'a pas reçu de l'autre participant (3), dans un laps de temps (Qz) donné à l'avance ou pouvant l'être, un télégramme (7, 9) ayant l'information (14) d'accusé de réception des télégrammes (6, 8) transmis jusqu'ici, les télégrammes (6, 8) sans accusé de réception sont transmis, de manière répétée, du premier participant (2) à l'autre participant (3), par l'autre canal (5) de communication.

2. Procédé suivant la revendication 1, dans lequel l'information (13) d'envoi est la valeur d'un compteur, dans lequel, pour chaque télégramme nouveau, on transmet une valeur incrémentée du compteur comme information (13) d'envoi, et en ce que l'information (14) d'accusé de réception est la valeur d'un autre compteur, cette valeur correspondant à la dernière valeur reçue sans lacune dans une suite donnée à l'avance de télégrammes reçus.

3. Participant en communication, qui est raccordé au moins à un premier et à un deuxième canal (4, 5) de communication et qui est constitué pour transmettre des télégrammes (6, 7, 8, 9), qui comprennent chacun un entête (11) de télégramme et un bloc (12) de données, par les canaux (4, 5) de communication, à un autre participant, et pour en recevoir de l'autre participant, dans lequel le participant (2, 3) est constitué, en outre, pour introduire, dans un télégramme (6, 7, 8, 9) à transmettre de ce genre, une information (13, 14) d'envoi et d'accusé de réception dans le bloc (12) de données, dans lequel, au moyen de l'information (13) d'envoi, tous les télégrammes (6, 8; 7, 9) transmis jusqu'ici à l'autre participant et, au moyen de l'information (14) d'accusé de réception, tous les télégrammes (6, 7, 8, 9) dont l'autre participant a accusé réception jusqu'ici sont indiqués et en ce que, dans le cas où le participant (2, 3) transmet un télégramme (6, 8) de ce genre par l'un des deux canaux (4) de communication à l'autre participant (2, 3) et où le participant (2, 3) n'a pas reçu de l'autre participant (2, 3), dans un laps de temps (Qz) donné à l'avance ou pouvant l'être, un télégramme (7, 9) ayant une information (14) d'accusé de réception des télégrammes (6, 8) transmis jusqu'ici, le participant (2, 3) transmet de manière répétée les télégrammes (6, 8) dont il n'a pas reçu d'accusé de réception à l'autre participant (2, 3) par l'autre canal (5) de communication.

4. Participant en communication suivant la revendication 3, dans lequel le participant (2, 3) a respectivement un premier et un deuxième compteurs et est constitué pour
- incrémenter le premier compteur de la valeur représentant l'information (13) d'envoi, si un télégramme nouveau est à transmettre et, à chaque télégramme nouveau, transmettre la valeur incrémentée et
- incrémenter le deuxième compteur de la valeur représentant l'information (14) d'accusé de réception, cette valeur correspondant à la dernière valeur reçue sans lacune dans une suite de données à l'avance de télégrammes reçus.

5. Système comprenant deux participants (2, 3) en communication suivant l'une des revendications précédentes 3 ou 4.
